# EUROPEAN PATENT APPLICATION

(11) **EP 4 847 382 A1**
(43) Date of publication of application: **02.12.2026**
(21) Application number: 25179686.8
(22) Date of filing: 29.05.2025
(51) Int. Cl.: B64C 25/00, B64C 25/28, B64C 25/36, B64D 45/00

(54) **AIRCRAFT WEIGHT ON WHEEL SYSTEM**

(71) Applicant: Safran Landing Systems UK Ltd, Gloucester, Gloucestershire GL2 9QH (GB)
(72) Inventor: CHAUHAN, Manish, Gloucester, GL2 9QH (GB)
(74) Representative: Latham, Stuart Alexander

(57) **Abstract**

An aircraft weight-on-wheels detection system is provided comprising: an aircraft landing gear having at least one wheel including an elastically deformable tyre; a plurality of sensor units statically mounted inside the tyre; and a data processing unit communicably coupled with each of the plurality of sensors units; wherein, each sensor unit is configured to detect a magnitude of deformation of the tyre and to transmit a trigger signal to the data processing unit when the magnitude of deformation exceeds a predetermined threshold, and wherein the data processing unit is configured to generate a weight-on-wheels signal when a predetermined number of said trigger signals from consecutive sensors units are received.

## Description

### Background

It is common practice for aircraft to include one or more systems to detect whether the aircraft is on the ground or in the air. This information is typically used to enable or disable, or otherwise control, other aircraft systems that if enabled incorrectly would pose a safety hazard. For example, for larger aircraft such as commercial passenger planes, operation of the engine thrust reversers or the nose wheel steering system is generally not permitted unless the aircraft is no longer in the air. Similarly, operation of certain in-flight systems, such as the Auto-Pilot system, is generally only enabled when the aircraft is no longer on the ground. Depending on the size and nature of the aircraft there may be other control systems where it is highly desirable, if not essential, that they may only be operational when the aircraft is either on the ground or in the air, but not for both.

For larger aircraft such as commercial passenger planes and other similar sized aircraft the above determination is accomplished using a 'weight-on-wheels' (WoW) system which detects when at least a portion of the weight of the aircraft is supported by the wheels and landing gear, which therefore implies that the aircraft is on the ground. Such WoW systems often utilise mechanical switches or proximity sensors to provide a signal when certain parts of the landing gear adopt a physical configuration that is indicative of the landing gear supporting the weight of the aircraft. For example, a proximity sensor may be placed on a set of torque links. As the aircraft lands the landing gear is compressed bring the torque links closer to one another and thus triggering the proximity sensor.

A disadvantage of such WoW systems is that at the point of landing there is a time delay between one or more of the aircraft wheels coming into contact with the ground and sufficient weight being placed on the landing gear to trigger or activate the proximity sensors or switches. If the sink rate of the aircraft (the rate of descent at the point of contacting the runway) is particularly slow then the time delay becomes extended to the extent that the pilot may wish to activate or utilise one or more of the ground based systems, such as the thrust reversers before the proximity sensors or switches of the WoW system have supplied the necessary signal(s) to enable those systems, This situation is potentially hazardous.

It is therefore a need for a weight-on-wheels system that mitigates or eliminates the time delay.

### Summary of the Invention

According to a first aspect of the present invention there is provided an aircraft weight-on-wheels detection system comprising: an aircraft landing gear having at least one wheel including an elastically deformable tyre; a plurality of sensor units statically mounted inside the tyre; and a data processing unit communicably coupled with each of the plurality of sensors units; wherein, each sensor unit is configured to detect a magnitude of deformation of the tyre and to transmit a trigger signal to the data processing unit when the magnitude of deformation exceeds a predetermined threshold, and wherein the data processing unit is configured to generate a weight-on-wheels signal when a predetermined number of said trigger signals from consecutive sensors units are received.

The data processing unit may be configured to generate the weight-on-wheels signal when at least two trigger signals are received from respective consecutive sensor units. Alternatively, it may be configured to generate the weight-on-wheels signal when at least four trigger signals are received from respective consecutive sensor units.

The plurality of sensor units are preferably mounted equidistant to each other.

Each sensor unit may comprise a distance sensor arranged to measure a distance between an inner surface of the tyre and a hub of the wheel to which the tyre is mounted, the measured distance being indicative of the magnitude of deformation of the tyre.

Additionally, each distance sensor may be further arranged to detect electro-magnetic radiation reflected from a target attached to an inner surface of the tyre. The target may comprise multiple individual targets, each individual target being arranged to reflect electro-magnetic radiation to a respective one of the distance sensors.

Each distance sensor may comprise a laser or ultrasonic sensor arranged to direct a laser or ultrasound beam respectively at the tyre.

Alternatively, each sensor unit may comprise a strain sensor attached to the inner surface of the tyre and arranged to measure local deformation of the tyre, the local deformation being indicative of the magnitude of deformation of the tyre.

Each sensor unit may comprise a sensor element arranged to provide sensor data to a sensor processor, the sensor processor being arranged to generate said trigger signal to the data processing unit.

Alternatively, each sensor unit may comprise the sensor element and a respective sensor processor.

The sensor processor may be arranged to receive sensor data from each of the sensor elements.

According to a further aspect of the present invention there is provided an aircraft comprising an aircraft weight-on-wheels system according to the preceding aspects.

### Brief Description of the Drawings

Various embodiments of the present invention are described below, by way of nonlimiting examples only, with reference to the accompanying drawings, of which:
Figure 1 is an illustrative diagram of an aircraft;
Figure 2 schematically illustrates an aircraft landing gear;
Figure 3 schematically illustrates an example of an aircraft weight-on-wheels detection system; and
Figure 4 schematically illustrates a sequence over time of possible triggers signals from a number of sensor units

### Detailed Description

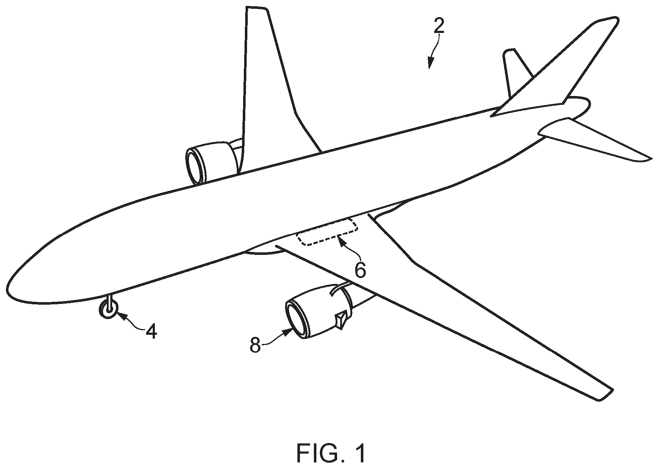

Figure 1 is a schematic diagram of an aircraft 2. The aircraft includes assemblies such as a nose landing gear 4, main landing gear 6 and engines 8. Other aircraft assemblies will be apparent to the skilled person. An aircraft assembly can be a group of interconnected parts which are arranged to be fitted to one or more other aircraft assemblies as a unit. The term aircraft as used herein includes aeroplanes, helicopters, UAVs and the like.

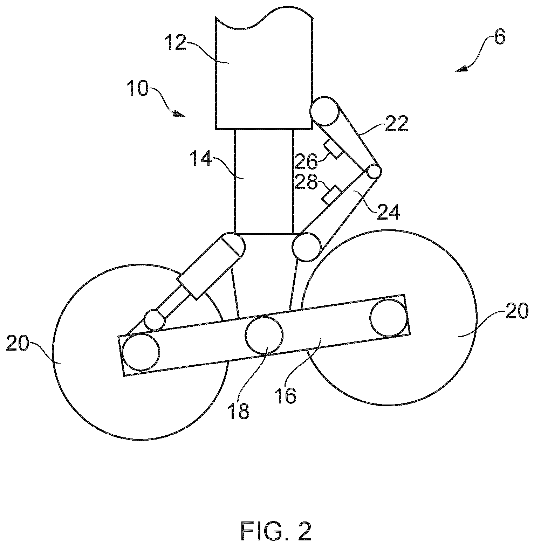

Figure 2 schematically illustrates a typical arrangement for the main landing gear 6, which includes a support member 10 that has an upper portion 12 arranged to be pivotally coupled to the main body of the aircraft (not illustrated) and a lower portion 14 that is slidably received within the upper portion 12. The support member 10 typically, but not necessarily, comprises a telescopic oleo-pneumatic shock strut. The lower portion 14 of the support member is pivotally coupled to a bogie beam 16 by means of a bogie beam pivot pin 18. In the particular example illustrated in Figure 1, the bogie beam 16 has first and second axles rotatably mounted at either end on which respective pairs of wheels 20 are mounted. In Figure 2 only a single one of each pair of wheels 20 is illustrated for the sake of clarity. A pair of torque links comprising an upper torque link 22 and a lower torque link 24 are pivotably coupled respectively to the upper and lower portions 12, 14 of the shock strut and also to one another.

Fastened to, or integrated in, the torque links is at least one proximity sensor which includes a first proximity sensor element on the upper torque link 22 and a second proximity sensor element on the lower torque link 24. In figure 2, the main landing gear is illustrated in a configuration corresponding to the landing gear being extended (deployed) but not supporting any of the aircraft's weight, e.g. shortly before landing or shortly after take-off. In this configuration the torque links are 'opened out' from one another and the first and second proximity sensor elements are not in close proximity to one another. During a landing event, the landing gear shock strut 10 will begin to compress as the weight of the aircraft comes onto the landing gear. Consequently, the torque links 22, 24 'close up' and the proximity sensor elements will come into closer proximity to one another. The proximity sensor will be arranged such that at a predefined position of the torque links the proximity sensor will output a 'weight-on-wheels' signal to one or more other systems of the aircraft. The reverse occurs during a take-off event - as the aircraft begins to leave the ground the shock strut extends, the torque links move apart and at a predefined position the proximity sensor ceases to output the weight-on-wheels signal (or outputs a separate 'weight-off-wheels' signal). It will also be appreciated that the proximity sensor could be located on other elements of the landing gear that move between different configurations as the landing gear compresses or extends and/or could be replaced by a switch arrangement.

The above weight-on-wheels/weight-off-wheels detection system suffers from a number of disadvantages. Primary amongst these is that during landing there is generally a time delay between one or more of the landing gear wheels 20 actually touching the ground and the proximity sensor providing the weight-on-wheels signal due to the shock strut 10 not starting to compress, and therefore the torque links not beginning to move relative to one another, until sufficient aircraft weight is placed on the shock strut. There are a number of mechanisms that contribute to this time delay. One contributory factor is the presence of some friction between the various moving elements of the landing gear, including the upper and lower portions of the support/shock strut, that therefore requires a certain amount of weight to be placed on the landing gear to overcome this friction and for the landing gear to start to compress. A further factor is relevant to main landing gear having multiple axles carried on a bogie beam (truck) pivotally connected to the shock strut, as illustrated in Figure 2. With such main landing gear configurations it is typical for the bogie beam to be orientated with either the front or rear axles pitched downwards, such that at the point of contact with the runway during landing only one set of wheels on one of the axles contacts the ground first and subsequently the bogie beam pivots until the wheels on both axles are in contact with the ground. Only after this phase will the shock strut start to compress. Finally, the tyres on the wheels will deform under the weight of the aircraft before the shock strut starts to compress.

As will be appreciated, the same mechanisms as described above also contribute 'in reverse' during a take-off event to introduce a time difference between a proximity/switch based system generating a weight-off-wheels signal and the aircraft tyres actually leaving the ground.

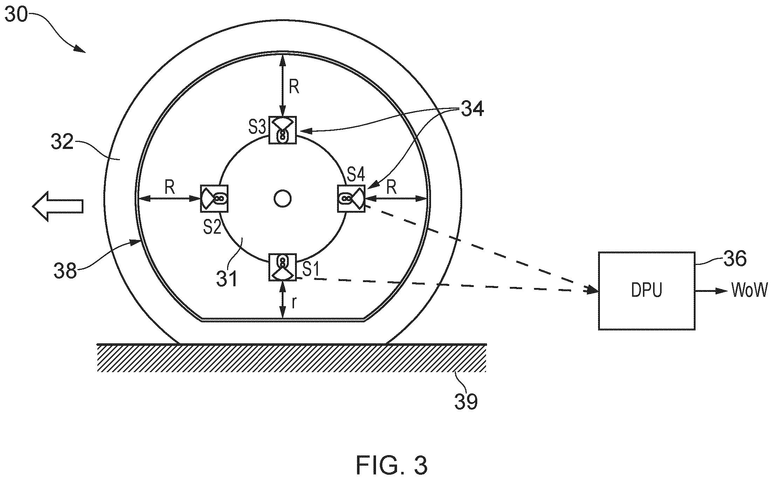

Figure 3 schematically illustrates an example of an aircraft weight-on-wheels detection system that seeks to provide a more accurate indication of aircraft weight-on-wheels/weight-off-wheels. The system includes an aircraft landing gear having at least one wheel. The landing gear may be a nose landing gear or main landing gear, such as illustrated in Figure 1. In Figure 3 the main mechanical elements of the landing gear, such as the shock strut and bogie beam are not illustrated for the purposes of clarity. The wheel 30 includes a wheel rim 31 arranged to be mounted to an axle of the landing gear (not illustrated). The wheel also includes an elastically deformable tyre 32 mounted to the wheel rim 31. Mounted internally to the tyre are a plurality of sensor units 34. Each sensor unit 34 is statically mounted inside the tyre, or in other words each sensor unit is statically mounted with respect to the wheel rim and tyre. The aircraft weight-on-wheels detection system further includes a data processing unit (DPU) 36 that is communicably coupled with each of the sensor units 34. The data processing unit is preferably arranged to wirelessly communicate with each of the sensor units, although the DPU may alternatively be communicably coupled to each of the sensor units using one or more wires. The data processing unit 36 may be a discrete unit mounted to the aircraft landing gear or another part of the aircraft to which the landing gear is fitted and arranged to be communicably couple to one or more systems of the aircraft, such as engine reverse thrust control module(s), wheel brake control modules, or cockpit information displays. Equally, the data processing unit 36 may be integrated with one or more of the aircraft systems.

Each sensor unit 34 is arranged to detect a parameter associated with the tyre 32 that is indicative of the magnitude of a deformation of the tyre, the deformation being in turn indicative of the landing gear supporting at least a portion of the aircraft's weight. In the example illustrated in Figure 3, each sensor unit includes a distance sensor arranged to measure a distance between an inner portion of the wheel adjacent to the axles to which the wheel rim is mounted (which may be referred to as a wheel hub) and an inner surface of the tyre. Examples of suitable distance sensors include sensors that are capable of at least detecting electro-magnetic radiation reflected from the inner surface 38 of the tyre such as, but not limited to, laser and ultrasonic sensors. In figure 3 the wheel is illustrated at a moment in time during rotation of the wheel in an anticlockwise direction as viewed (i.e. with a direction of travel of right-to-left as viewed) and as if the wheel is supporting sufficient of the aircraft's weight for the portion of the tyre 32 in contact with the ground 39 to be deformed, or 'flattened'. The sensor unit 34 that is illustrated as being directed directly towards the ground, labelled S1 in Figure 2, therefore measures a distance r that is less than a distance R measured by the remaining sensor units, labelled S2-S4, that are directed to portions of the tyre 32 that are not in that instant undergoing any deformation (as they are not in contact with the ground). When the magnitude of the distance measured by each sensor unit is less than a predetermined threshold, the sensor unit is arranged to generate and transmit a trigger signal to the data processing unit. In the example illustrated in Figure 3 utilising distance sensors, the measured distance is inversely proportional to the deformation of the tyre. Therefore, the sensor unit is arranged to generate and transmit the trigger signal when the tyre deformation exceeds a threshold magnitude.

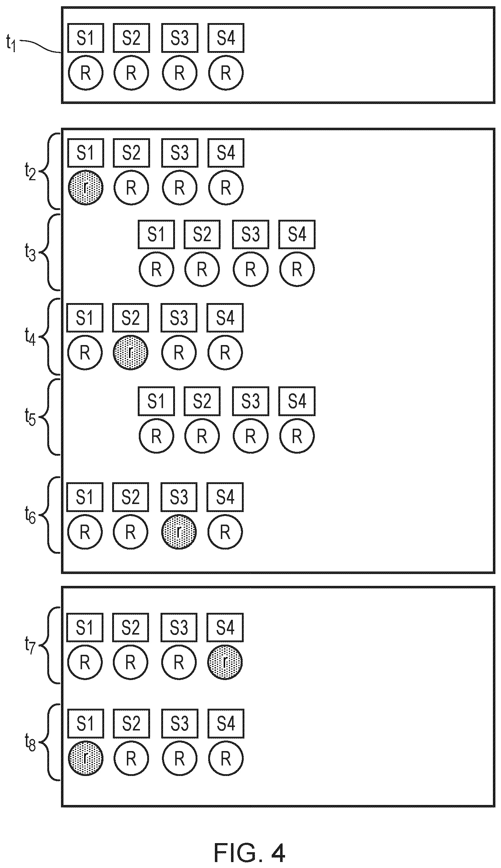

The data processing unit 36 is arranged to receive the trigger signals generated by the sensor units and, using the trigger signals, generate a weight-on-wheels signal. Figure 4 schematically illustrates a sequence over time of possible triggers signals from a number of sensor units within a wheel and the logic implemented by the data processing unit to generate a weight-on-wheels signal. Initial time t1 represents a moment immediately prior to the wheel coming into contact with the ground during a landing event. In Figure 4, four sensor units 34 are represented, corresponding to the four sensor units S1-S4 shown in Figure 3, with the measured distance as previously discussed for each sensor unit also illustrated. At t1 the wheel is not in contact with the ground and therefore the tyre is not deformed at all. Consequently, the distance R measured by each sensor unit exceeds the threshold value and no trigger signals are generated. Time t2 represents the moment that the tyre 32 is first in contact with the ground and has undergone deformation due to the weight of the aircraft. Consequently, sensor unit S1 measures a distance r which is less than a predetermined threshold and therefore generates a trigger signal, indicated on Figure 4 by the shaded distance 'reading', which is transmitted to the data processing unit. Time t3 represents the time at which the tyre has rotated by 45 degrees. As can be appreciated with reference to Figure 3, at this point none of the sensor units will be directed to a portion of the tyre experiencing any deformation and hence no trigger signal is generated. Time t4 represents the time at which the tyre has rotated a further 45 degrees (90 degrees after t2). Now sensor unit S2 will be directed at a portion of the tyre in contact with the ground and therefore undergoing deformation, such that sensor unit S2 will measure distance r and consequently generate a trigger signal for transmission to the data processing unt 36. Time t5 represents the time at which the tyre has rotated by 135 degrees, at which point no trigger signal is issued (as for t3), and t6 represents the time at which the tyre has rotated by 180 degrees at which sensor unit S3 generates a trigger signal for transmission to the data processing unit. Times t7 and t8 represent further tyre rotations of 90 degrees such that a trigger signal is generated by sensor unit S4 and S1 (again) respectively.

The data processing unit is arranged to determine when trigger signals from consecutively located sensor units have been received, e.g. S1 and S2 etc, and is arranged to generate a weight-on-wheels signal when a predetermined number of trigger signals from consecutively placed sensor units are received. The predetermined number can be selected depending on a number of parameters including, but not limited to, aircraft type, aircraft load, desired sensitivity of the system, tyre loads and/or tyre wear, and aircraft descent rate. For example, it may be acceptable for the data processing unit to be arranged to generate a weight-on-wheels signal after receiving only two trigger signals from consecutively located sensor units. Alternatively, it may be desirable for a greater number of consecutive signals to be received before a weigh-on-wheels signal is generated.

For clarity, consecutive sensor units are sensor units that located within the wheel circumferentially adjacent to each other and therefore will pass a fixed view point in turn as the tyre rotates. In preferred examples of the detection system the sensor units are spaced apart at equal distance to each other. However, in other examples it may be acceptable for an uneven spacing of the sensor units to be adopted.

In those examples in which the sensor units 32 use electromagnetic radiation, such as light, to measure the distance from the sensor to the inner surface of the tyre, it may be advantageous to provide a reflective target at which respective sensors are directed. Separate discreet targets associated with each sensor unit may be provided, or alternatively the target may be formed of a single continuous area of reflective material extending around the inner circumference of the tyre.

In alternative examples, the sensor units may include one or more strain gauges, typically in a 'rosette type' arrangement, that are arranged to measure the tyre deformation as a function of measured strain in the tyre itself. In this arrangement the sensor units are mounted directly to the inner surface of the tyre.

The sensor units may comprise a sensor element arranged to measure the desired parameter (e.g. distance or strain) and a sensor processor arranged to receive sensor data from the sensor elements. The sensor processor is arranged to compare the sensor data to the predetermined threshold and thus determine when to generate the trigger signals. Each sensor unit may include both sensor element(s) and a sensor processor, or alternatively a single data processor may be configured to receive sensor data from each of the sensor units.

The aircraft weight-on-wheels detection system described above enables a more accurate weight-on-wheels determination to be provided. For example, it allows a weight-on-wheels signal to be generated for each wheel of a multi-wheel landing gear, as opposed to a single signal for the entire landing gear.

## Claims

1. An aircraft weight-on-wheels detection system comprising:
an aircraft landing gear having at least one wheel including an elastically deformable tyre;
a plurality of sensor units statically mounted inside the tyre; and
a data processing unit communicably coupled with each of the plurality of sensors units;
wherein, each sensor unit is configured to detect a magnitude of deformation of the tyre and to transmit a trigger signal to the data processing unit when the magnitude of deformation exceeds a predetermined threshold, and
wherein the data processing unit is configured to generate a weight-on-wheels signal when a predetermined number of said trigger signals from consecutive sensors units are received.

2. The aircraft weight-on-wheels detection system of claim 1, wherein the data processing unit is configured to generate the weight-on-wheels signal when at least two trigger signals are received from respective consecutive sensor units.

3. The aircraft weight-on-wheels detection system of claim 1, wherein the data processing unit is configured to generate the weight-on-wheels signal when at least four trigger signals are received from respective consecutive sensor units.

4. The aircraft weight-on-wheels detection system of any preceding claim, wherein the plurality of sensor units are mounted equidistant to each other.

5. The aircraft weight-on-wheels detection system of any preceding claim, wherein each sensor unit comprises a distance sensor arranged to measure a distance between an inner surface of the tyre and a hub of the wheel to which the tyre is mounted, the measured distance being indicative of the magnitude of deformation of the tyre.

6. The aircraft weight-on-wheels detection system of claim 5, wherein each distance sensor is further arranged to detect electro-magnetic radiation reflected from a target attached to an inner surface of the tyre.

7. The aircraft weight-on-wheels detection system of claim 6, wherein the target comprises multiple individual targets, each individual target being arranged to reflect electro-magnetic radiation to a respective one of the distance sensors.

8. The aircraft weight-on-wheels detection system of any one of claims 5 to 7, wherein each distance sensor comprises a laser or ultrasonic sensor arranged to direct a laser or ultrasound beam respectively at the tyre.

9. The aircraft weight-on-wheels detection system of any one of claims 1 to 4, wherein each sensor unit comprises a strain sensor attached to the inner surface of the tyre and arranged to measure local deformation of the tyre, the local deformation being indicative of the magnitude of deformation of the tyre.

10. The aircraft weight-on-wheels detection system of any preceding claim, wherein each sensor unit comprises a sensor element arranged to provide sensor data to a sensor processor, the sensor processor being arranged to generate said trigger signal to the data processing unit.

11. The aircraft weight-on-wheels detection system of claim 10, wherein each sensor unit comprises the sensor element and a respective sensor processor.

12. The aircraft weight-on-wheels detection system of claim 10, wherein said sensor processor is arranged to receive sensor data from each of the sensor elements.

13. An aircraft comprising an aircraft weight-on-wheels detection system according to any preceding claim.
